# EUROPÄISCHE PATENTSCHRIFT

(11) **EP 1 359 485 B1**
(45) Veröffentlichungstag und Bekanntmachung des Hinweises auf die Patenterteilung: **29.04.2015**
(21) Anmeldenummer: 02009949.5
(22) Anmeldetag: 03.05.2002
(51) Int. Cl.: G05B 19/042, G05B 19/4067, G05B 19/418

(54) **Steuer- und Überwachungssystem**
Control and monitoring system
Système de commande et surveillance

(43) Veröffentlichungstag der Anmeldung: 05.11.2003
(73) Patentinhaber: Infineon Technologies AG, 85579 Neubiberg (DE)
(72) Erfinder: von Wendorff, Wilhard Christophorus, Dr., 81251 München (DE)
(74) Vertreter: Repkow, Ines

(56) Entgegenhaltungen:
- EP-A- 0 137 046
- EP-A- 0 766 153
- EP-A- 1 011 035
- EP-A2- 0 306 211
- DE-A- 19 614 201
- DE-A- 19 614 748
- US-A- 5 138 708
- US-A- 5 170 109
- US-A- 5 189 352
- ANDERSON K: "IMPLEMENTATION COST/BENEFITS FOR FAULT TOLERANT SYSTEMS" , ISA TRANSACTIONS, INSTRUMENT SOCIETY OF AMERICA. PITTSBURGH, US, VOL. 30, NR. 4, PAGE(S) 107-116 XP000275598 ISSN: 0019-0578 * Seite 110-113; Abbildung 5 *

## Beschreibung

Die vorliegende Erfindung betrifft ein System gemäß dem Oberbegriff des Patentanspruchs 1 und ein Verfahren gemäß dem Oberbegriff des Patentanspruchs 10, d.h. ein System mit einer elektrischen Steuereinrichtung, und mit einer Überwachungseinrichtung, durch welche überwacht wird, ob das System ordnungsgemäß arbeitet, sowie ein Verfahren zum Betreiben eines solchen Systems.

Systeme mit einer die ordnungsgemäße Funktion des Systems überwachenden Überwachungseinrichtung sind beispielsweise ausfallsichere Systeme (fail safe systems) oder fehlertolerante Systeme (failure tolerant systems).

Solche Systeme weisen im allgemeinen die Besonderheit auf, daß sie bestimmte Komponenten mehrfach enthalten, genauer gesagt Komponenten enthalten, die die selben oder einander entsprechende Aktionen ausführen oder veranlassen.

Die mehreren Komponenten, die die selben oder einander entsprechende Aktionen ausführen oder veranlassen, können beispielsweise, aber selbstverständlich nicht ausschließlich, identisch aufgebaute und identisch betriebene Steuereinrichtungen wie etwa identisch aufgebaute und identisch betriebene Mikroprozessoren oder Mikrocontroller, oder identisch aufgebaute und identisch betriebene Cores eines oder mehrerer Mikroprozessoren oder Mikrocontroller sein.

Die Überprüfung der ordnungsgemäßen Funktion eines solchen Systems erfolgt im allgemeinen dadurch, daß überprüft wird, ob die die selben oder einander entsprechenden Aktionen ausführenden oder veranlassenden Komponenten identische oder einander entsprechende Ergebnisse oder Zwischenergebnisse liefern.

Wenn durch die Überwachungseinrichtung festgestellt wird, daß dies nicht der Fall ist, wird
- die fehlerhafte Komponente deaktiviert und gegebenenfalls durch eine der anderen Komponenten ersetzt, die die selben oder einander entsprechende Aktionen ausführen oder veranlassen (bei failure tolerant systems), oder
- das gesamte System deaktiviert (bei fail safe systems).

Dadurch kann gewährleistet werden, daß die durch das System gesteuerte Vorrichtung, beispielsweise das Anti-Blockier-System oder der Airbag eines Kraftfahrzeuges, nicht vollständig außer Kontrolle gerät.

Andererseits ist es jedoch so, daß durch das Deaktivieren des Systems oder bestimmter Teile desselben keine ordnungsgemäße oder keine so sichere Steuerung der durch das System gesteuerten Vorrichtung mehr möglich ist.

Es gibt jedoch auch Fälle, in welchen der nicht ordnungsgemäße Betrieb einer Systemkomponente von vorübergehender Natur ist. Dies ist beispielsweise der Fall, wenn das System unter Verwendung von Daten arbeitet, bei deren Speicherung aufgrund eines einmaligen und sich im allgemeinen nicht wiederholenden Ereignisses, beispielsweise aufgrund einer normalerweise nicht auftretenden elektromagnetischen Störung, ein Fehler aufgetreten ist. In diesem Fall müßte keine Deaktivierung des Systems oder der vom Fehler betroffenen Systemkomponente erfolgen; es würde ausreichen, wenn das System oder die betreffende Systemkomponente zurückgesetzt wird. Allerdings dauert ein Zurücksetzen des Systems oder der vom Fehler betroffenen Systemkomponente und eine gegebenenfalls erforderliche Synchronisierung der die selben oder einander entsprechenden Aktionen ausführenden oder veranlassenden Systemkomponenten häufig so lange, daß es in der Praxis nicht oder nur unter Inkaufnahme erheblicher Nachteile durchführbar ist. Während des Rücksetzen des Systems kann die von diesem gesteuerte Vorrichtung nämlich nicht oder nur eingeschränkt gesteuert werden.

Die US 5,137,708 A offenbart ein System, bei welchem eine fehlerhaft ausgeführte Operation wiederholt wird, wobei zunächst ein Zurücksetzen einer CPU in einen vorherigen Zustand erfolgt, um vorübergehende Fehler zu erkennen und zu beseitigen. Dieses System löst jedoch die vorstehend angesprochenen Probleme nicht zur vollen Zufriedenheit.

Der vorliegenden Erfindung liegt daher die Aufgabe zugrunde, eine Möglichkeit zu finden, durch welche mit geringem Aufwand und ohne nennenswerte Störung des Betriebes des Systems erreicht werden kann, daß das System oder Teile desselben nur dann deaktiviert oder zurückgesetzt werden, wenn der aufgetretene Fehler kein vorübergehender Fehler ist.

Diese Aufgabe wird erfindungsgemäß durch das in Patentanspruch 1 beanspruchte System und das in Patentanspruch 10 beanspruchte Verfahren gelöst, also insbesondere ohne ein zwischenzeitliches Rücksetzen der Steuereinrichtung oder des diese enthaltenden Systems und ohne ein Zurückversetzen in einen vorigen Zustand.

Dadurch kann innerhalb kürzester Zeit, insbesondere ohne ein Rücksetzen der Steuereinrichtung oder des diese enthaltenden Systems festgestellt werden, ob ein bei der Überwachung erfaßter Fehler ein vorübergehender oder ein dauerhafter Fehler ist. Tritt der erfaßte Fehler nach der Fortsetzung des Betriebes der Steuereinrichtung erneut auf, so handelt es sich um einen dauerhaften Fehler, und das System oder bestimmte Teile desselben müssen zurückgesetzt oder deaktiviert werden; tritt der Fehler hingegen nicht wieder auf, so kann das System normal weiterarbeiten.

Damit ist es mit geringem Aufwand und ohne nennenswerte Störung des Systems möglich, daß das System oder Teile desselben nur dann zurückgesetzt oder deaktiviert werden, wenn der erfaßte Fehler ein dauerhafter Fehler ist.

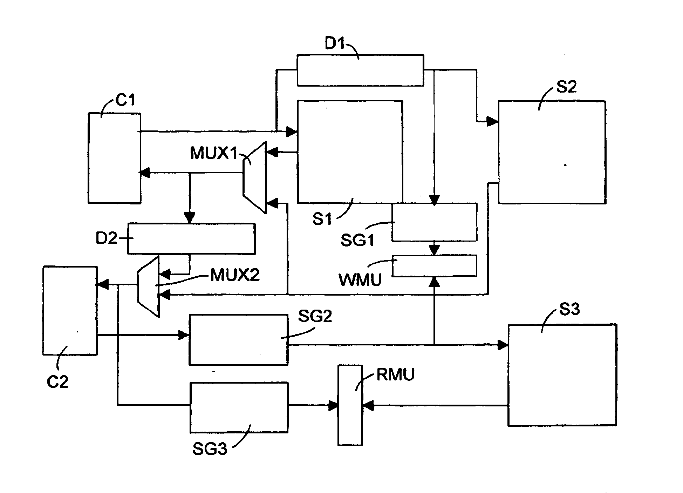

Vorteilhafte Weiterbildungen der Erfindung sind den Unteransprüchen, der folgenden Beschreibung, und der Figur entnehmbar.

Die Erfindung wird nachfolgend anhand eines Ausführungsbeispiels unter Bezugnahme auf die Figur näher erläutert.

Die Figur zeigt den Aufbau der im folgenden beschriebenen Anordnung.

Die beschriebene Anordnung dient zur Steuerung des Anti-Blockier-Systems eines Kraftfahrzeuges. Eine solche Anordnung läßt sich jedoch auch zur Steuerung von beliebigen anderen Vorrichtungen verwenden.

Die Anordnung ist Bestandteil eines failure tolerant systems oder eines fail safe systems, und enthält
- mehrere Komponenten, die die selben oder einander entsprechende Aktionen ausführen oder veranlassen, und
- eine Überwachungseinrichtung, durch welche überwacht wird, ob durch die die selben oder einander entsprechende Aktionen ausführenden oder veranlassenden Komponenten tatsächlich die selben oder einander entsprechende Aktionen ausgeführt oder veranlaßt werden.

Bei den die selben oder einander entsprechende Aktionen ausführenden oder veranlassenden Komponenten handelt es sich im betrachteten Beispiel um zwei Steuereinrichtungen, wobei diese Steuereinrichtungen im betrachteten Beispiel durch zwei Cores bzw. CPUs einer programmgesteuerten Einheit wie beispielsweise eines Mikrocontrollers oder Mikroprozessors gebildet werden.

Hierauf besteht jedoch keine Einschränkung. Die die selben oder einander entsprechende Aktionen ausführenden oder veranlassenden Komponenten können auch andere Einrichtungen als Cores, beispielsweise sogenannte state machines oder sonstige Steuereinrichtungen sein. Darüber hinaus müssen diese Komponenten auch nicht Bestandteil einer einzigen programmgesteuerten Einheit sein. Sie können auch Bestandteil von verschiedenen programmgesteuerten Einheiten sein, und sie können auch Bestandteil einer oder mehrerer anderer Einrichtungen sein.

Die Cores arbeiten im betrachteten Beispiel zeitlich versetzt. D.h., die von dem einen Core ausgeführten oder veranlaßten Aktionen werden von dem anderen Core eine bestimmte Zeit (eine oder mehrere Taktperioden) später ausgeführt oder veranlaßt. Hierauf besteht jedoch ebenfalls keine Einschränkung. Die Besonderheiten der im folgenden beschriebenen Anordnung lassen sich auch in Anordnungen anwenden, in welchen die Komponenten, die die selben oder einander entsprechende Aktionen ausführen oder veranlassen, die betreffenden Aktionen zeitgleich ausführen oder veranlassen.

Die im folgenden beschriebene Anordnung ist in der Figur gezeigt.

Die gezeigte Anordnung enthält einen ersten Core C1, einen zweiten Core C2, eine erste Speichereinrichtung S1, eine zweite Speichereinrichtung S2, eine dritte Speichereinrichtung S3, eine erste Verzögerungsvorrichtung D1, eine zweite Verzögerungsvorrichtung D2, einen ersten Signatur-Generator SG1, einen zweiten Signatur-Generator SG2, einen dritten Signatur-Generator SG3, einen ersten Multiplexer MUX1, einen zweiten Multiplexer MUX2, eine Schreib-Überwachungseinrichtung WMU, und eine Lese-Überwachungseinrichtung RMU.

Der erste Core C1 und der zweite Core C2 sind die vorstehend bereits erwähnten Cores, die identische oder einander entsprechende Aktionen ausführen oder veranlassen.

Die Cores C1 und C2 sind identisch aufgebaute Cores, die so betrieben werden, daß sie zeitversetzt das selbe Programm abarbeiten. Dadurch werden im ordnungsgemäßen Betrieb der Anordnung die vom ersten Core C1 ausgeführten oder veranlaßten Aktionen vom zweiten Core C2 eine bestimmte Verzögerungszeit dt (eine bestimmte Anzahl von Taktperioden) später ausgeführt.

Die Daten, die das von den Cores C1 und C2 auszuführende Programm repräsentieren, sind in einem in der Figur nicht gezeigten Programmspeicher gespeichert. Im betrachteten Beispiel ist nur ein einziger Programmspeicher vorgesehen, und das von den Cores C1 und C2 auszuführende Programm ist in diesem Programmspeicher nur ein einziges Mal gespeichert. Das Auslesen des durch die Cores C1 und C2 auszuführenden Programmes aus dem Programmspeicher kann so erfolgen, daß der Programmspeicher durch den ersten Core C1 adressiert und zur Ausgabe der entsprechenden Daten veranlaßt wird, und daß die daraufhin aus dem Programmspeicher ausgegebenen Daten dem Core C1, und - um die vorstehend bereits erwähnte Verzögerungszeit td verzögert - dem Core C2 zugeführt werden. Die Verzögerung erfolgt durch eine in der Figur nicht gezeigte Verzögerungsvorrichtung.

An dieser Stelle sei angemerkt, daß auch die Verzögerungsvorrichtungen D1 und D2 die Ausgabe der ihnen zugeführten Daten um die Verzögerungszeit td verzögern.

Die Cores C1 und C2 arbeiten die Befehle, die durch die vom Programmspeicher erhaltenen Daten repräsentiert werden, auf die übliche Art und Weise ab. Die Abarbeitung erfolgt in einer Pipeline, welche im betrachteten Beispiel vier Stufen umfaßt. Die Pipeline-Stufen sind im betrachteten Beispiel
- eine Fetch-Stufe, in welcher die abzuarbeitenden Befehle aus dem Programmspeicher geholt werden,
- eine Decode-Stufe, in welcher die abzuarbeitenden Befehle decodiert werden,
- eine Execute-Stufe, in welcher die abzuarbeitenden Befehle ausgeführt werden, und
- eine Write-Back-Stufe, in welcher die in der Execute-Stufe erzeugten Ergebnisse in einen Speicher geschrieben werden.

Der Vollständigkeit halber sei angemerkt, daß die Pipeline auch mehr, weniger oder andere Pipeline-Stufen umfassen kann.

Die Speicher, in welche die in der Write-Back-Stufe ausgegebenen Daten gespeichert werden, sind die Speichereinrichtungen S1 bis S3. In diesen Speichereinrichtungen sind auch die Operanden gespeichert, die zur Befehlsausführung benötigt und bei Bedarf von den Cores C1 und C2 eingelesen werden.

Die Speichereinrichtungen S1 bis S3 werden im betrachteten Beispiel durch jeweils mehrere Register umfassende Registersätze gebildet. Die Speichereinrichtungen S1 bis S3 können aber auch durch beliebige andere Speicher realisiert werden.

Die erste Speichereinrichtung S1 wird vom ersten Core C1 ausgelesen, und wird vom ersten Core C1 beschrieben.

Die zweite Speichereinrichtung S2 wird vom zweiten Core C2 ausgelesen, und wird vom ersten Core C1 beschrieben.

Die dritte Speichereinrichtung S3 wird vom zweiten Core C2 ausgelesen, und wird vom zweiten Core C2 beschrieben.

Im ordnungsgemäßen Betrieb der Anordnung
- veranlaßt der Core C1 die Ausgabe der auszuführenden Befehle aus dem Programmspeicher, woraufhin die Befehle dem Core C1 direkt, und dem Core C2 über die vorstehend bereits erwähnte, in der Figur nicht gezeigte Verzögerungsvorrichtung zugeführt werden,
- liest der Core C1 zur Befehlsausführung benötigte Operanden aus der ersten Speichereinrichtung S1 aus,
- schreibt der Core C1 bei der Befehlsausführung erzeugte Daten in die erste Speichereinrichtung S1 und in die zweite Speichereinrichtung S2,
- liest der Core C2 zur Befehlsausführung benötigte Operanden aus der zweiten Speichereinrichtung S2 aus, und
- schreibt der Core C2 bei der Befehlsausführung erzeugte Daten in die dritte Speichereinrichtung S3.

Die Daten, die der Core C1 aus der ersten Speichereinrichtung S1 ausliest, werden dem Core C1 über den ersten Multiplexer MUX1 zugeführt. Dem Multiplexer MUX1 werden auch die Daten zugeführt, die auf Veranlassung durch den Core C2 aus der zweiten Speichereinrichtung S2 ausgegeben werden; der Multiplexer MUX1 wird im normalen Betrieb der Anordnung jedoch so angesteuert, daß er die aus der ersten Speichereinrichtung S1 ausgegebenen Daten an den Core C1 weiterleitet.

Die Daten, die der Core C2 aus der zweiten Speichereinrichtung S2 ausliest, werden dem Core C2 über den zweiten Multiplexer MUX2 zugeführt. Dem Multiplexer MUX2 werden auch die aus dem ersten Multiplexer MUX1 ausgegebenen Daten zugeführt; der Multiplexer MUX2 wird im normalen Betrieb der Anordnung jedoch so angesteuert, daß er die aus der zweiten Speichereinrichtung S2 ausgegebenen Daten an den Core C2 weiterleitet.

Die aus dem ersten Multiplexer MUX1 ausgegebenen Daten werden dem zweiten Multiplexer MUX2 über die Verzögerungsvorrichtung D2, also um die Verzögerungszeit td verzögert zugeführt.

Die Daten, die der Core C1 in die Speichereinrichtungen S1 und S2 schreibt, werden der ersten Speichereinrichtung S1 direkt zugeführt, und der zweiten Speichereinrichtung S2 über die erste Verzögerungsvorrichtung D1, also um die Verzögerungszeit td verzögert zugeführt.

Die Daten, die der Core C2 bei der Ausführung der Befehle erzeugt, schreibt dieser über den Signatur-Generator SG2 in die dritte Speichereinrichtung S3.

Der Signatur-Generator SG2 erzeugt aus den ihm zugeführten Daten eine Signatur. Dabei wird aus den originalen Daten ein bestimmte Eigenschaften dieser Daten repräsentierender Code gebildet. Im betrachteten Beispiel handelt es sich bei diesem Code um einen CRC-Code (cyclic redundancy check code) oder einen ECC-Code (error correction code). Es können jedoch auch andere Codes gebildet werden. Dies gilt auch für die Signatur-Generatoren SG1 und SG3; die Signatur-Generatoren SG1 bis SG3 sind identisch aufgebaute und arbeitende Signatur-Generatoren.

Das Speichern einer Signatur anstelle der vom Core C2 ausgegebenen Daten in der dritten Speichereinrichtung S3 ist vorteilhaft, weil die Signatur-Daten weniger umfangreich als die vom Core C2 ausgegebenen Daten sind, und die dritte Speichereinrichtung S3 daher kleiner ausgebildet werden kann als die Speichereinrichtungen S1 und S2. Der Vollständigkeit halber sei angemerkt, daß auf den Signatur-Generator SG2 auch verzichtet werden könnte, also die vom zweiten Core C2 ausgegebenen Daten in die dritte Speichereinrichtung S3 geschrieben werden können. In diesem Fall könnten auch die anderen Signatur-Generatoren SG1 und SG3 entfallen.

Die in der Figur gezeigte Anordnung enthält darüber hinaus Überwachungseinrichtungen, durch welche überwacht wird, ob das System ordnungsgemäß arbeitet. Diese Überwachungseinrichtungen sind die vorstehend bereits erwähnte Lese-Überwachungseinrichtung RMU, und die vorstehend ebenfalls bereits erwähnte Schreib-Überwachungseinrichtung WMU.

Durch die Lese-Überwachungseinrichtung RMU wird überprüft, ob die auf Veranlassung durch den Core C2 aus der Speichereinrichtung S2 ausgegebenen Daten und die auf Veranlassung durch den Core C2 aus der Speichereinrichtung S3 ausgegebenen Daten identisch sind oder einander entsprechen.

Genauer gesagt ist es so, daß die Lese-Überwachungseinrichtung RMU,
- durch einen im folgenden als Vergleich V1 bezeichneten Vergleich ermittelt, ob die Daten, die der Signatur-Generator SG3 aus den aus der Speichereinrichtung S2 ausgegebenen Daten bildet, und die aus der Speichereinrichtung S3 ausgegebenen Daten identische oder einander entsprechende Daten sind, und/oder
- durch einen im folgenden als Vergleich V2 bezeichneten Vergleich ermittelt, ob die Daten, die der Signatur-Generator SG3 aus den aus der Speichereinrichtung S1 ausgegebenen Daten bildet, und die aus der Speichereinrichtung S3 ausgegebenen Daten identische oder einander entsprechende Daten sind.

Die miteinander verglichenen Daten müßten bei ordnungsgemäßem Betrieb der Anordnung übereinstimmen, weil die Speichereinrichtungen S1 bis S3 durch die Cores C1 und C2 mit identischen bzw. einander entsprechenden Daten beschrieben werden, und weil die durch die Lese-Überwachungseinrichtung RMU verglichenen Daten von identischen oder einander entsprechenden Adressen der Speichereinrichtungen S1 bis S3 ausgelesen wurden.

Wenn die von der Lese-Überwachungseinrichtung RMU durchgeführten Vergleiche ergeben, daß die verglichenen Daten identisch sind oder einander entsprechen, liegt keine Störung vor, so daß die Anordnung normal weiterarbeiten kann. Anderenfalls, d.h. wenn die verglichenen Daten nicht identisch sind oder einander nicht entsprechen, liegt eine Störung vor, auf welche die Lese-Überwachungseinrichtung RMU durch die später noch genauer beschriebenen Maßnahmen reagiert.

Um einen ordnungsgemäßen Betrieb der Anordnung zu gewährleisten, kann es ausreichen, wenn die Lese-Überwachungseinrichtung RMU nur den Vergleich V1 ausführt und auf dabei erfaßte Fehler reagiert.

Wenn die Lese-Überwachungseinrichtung RMU beim Vergleich V1 feststellt, daß die miteinander verglichenen Daten nicht identische oder einander entsprechende Daten sind,
- hält sie die Cores C1 und C2 an (Schritt V1-1),
- sorgt sie dafür, daß dem Core C2 fehlerfreie Daten zugeführt werden (Schritt V1-2),
- sorgt sie dafür, daß die Cores C1 und C2 bei der Fortsetzung des Betriebes mit der Ausführung der Operation beginnen, die ausgeführt wurde, als der Fehler erfaßt wurde (Schritt V1-3), und
- läßt die Cores C1 und C2 wieder weiterlaufen (Schritt V1-4).

Der Schritt V1-2 kann darin bestehen, daß die Lese-Überwachungseinrichtung RMU unter Verwendung der ihr zugeführten Signaturen, genauer gesagt unter Verwendung eines darin enthaltenen Fehlerkorrekturcodes (ECC), eine Fehlerkorrektur der aus der Speichereinrichtung S2 ausgegebenen Daten durchführt, und in der Speichereinrichtung S2 die fehlerhaften Daten mit den korrigierten Daten überschreibt. Dies wird im folgenden als Schritt V1-2a bezeichnet.

Zur Ausführung des Schrittes V1-3 kann vorgesehen werden,
- daß in regelmäßigen Abständen, oder aber zumindest immer dann, wenn einer der Cores C1 und C2 Daten aus den Speichereinrichtungen S1 bis S3 holt, die aktuellen Zustände der Pipelines der Cores C1 und C2 in den Cores zwischengespeichert werden, und
- daß in Schritt V1-3 der zwischengespeicherte Pipeline-Zustand oder einer der zwischengespeicherten Pipeline-Zustände in die Pipeline geladen wird.

Alternativ könnte vorgesehen werden, daß der Befehl, für dessen Ausführung die Daten aus einer der vorhandenen Speichereinrichtungen geholt werden müssen, nochmals aus dem Programmspeicher geladen und ausgeführt wird.

Daß die Lese-Überwachungseinrichtung dafür sorgt, daß die Cores C1 und C2 bei der Fortsetzung des Betriebes mit der Ausführung der Operation beginnen, die ausgeführt wurde, als der Fehler erfaßt wurde, kann auch dadurch bewerkstelligt werden, daß das Anhalten der Cores C1 und C2 so frühzeitig erfolgt, daß diese sich beim Anhalten noch in dem Zustand befinden, in welchem sie sich vor dem Auftreten des erfaßten Fehlers befanden. In diesem Fall kann der Schritt V1-3 entfallen.

Die Lese-Überwachungseinrichtung RMU kann auch auf andere Weise dafür sorgen, daß dem Core C2 fehlerfreie Daten zugeführt werden. Dies erweist sich insbesondere als vorteilhaft, wenn in der Signatur kein Fehlerkorrekturcode enthalten ist, oder wenn eine Korrektur der fehlerhaften Daten unter Verwendung des Fehlerkorrekturcodes nicht möglich ist. Die besagte andere Fehlerkorrektur erfolgt in einem Schritt V2-2b, welcher anstelle des vorstehend erwähnten Schrittes V1-2a oder nach dem Schritt V1-2a ausgeführt wird.

In Schritt V2-2b führt die Lese-Überwachungseinrichtung RMU zunächst den Vergleich V2 durch.

Dieser Vergleich wird durchgeführt, wenn der zweite Multiplexer MUX2 umgeschaltet, d.h. so angesteuert wird, daß er die aus dem ersten Multiplexer MUX1 ausgegebenen und durch die Verzögerungsvorrichtung V2 verzögerten Daten weiterleitet.

Wenn der von der Lese-Überwachungseinrichtung RMU durchgeführte Vergleich V2 ergibt, daß die verglichenen Daten identisch sind oder einander entsprechen, wird der die fehlerhaften Daten enthaltende Teil der zweiten Speichereinrichtung S2 mit dem Inhalt der ersten Speichereinrichtung S1 überschrieben. Dies darf jedoch nicht erfolgen, wenn die dem Vergleich zugrundeliegenden Daten der ersten Speichereinrichtung S1 zwischenzeitlich überschrieben wurden. In diesem Fall müssen die Anordnung oder bestimmte Teile derselben in einen definierten Zustand versetzt, oder zurückgesetzt, oder deaktiviert werden. Die Anordnung oder bestimmte Teile derselben müssen auch in einen definierten Zustand versetzt, öder zurückgesetzt, oder deaktiviert werden, wenn der Vergleich V2 ergibt, daß die verglichenen Daten nicht identisch sind oder einander nicht entsprechen.

Die Anordnung oder bestimmte Teile derselben müssen ferner in einen definierten Zustand versetzt, oder zurückgesetzt, oder deaktiviert werden, wenn der Schritt V1-2b nicht durchgeführt wird und durch den Schritt V1-2a keine Fehlerkorrektur möglich ist.

Anstelle des Überschreibens der zweiten Speichereinrichtung S2 mit dem Inhalt der ersten Speichereinrichtung S1 könnte vorgesehen werden, den zweiten Multiplexer MUX2 umzuschalten, d.h. so anzusteuern, daß er die aus dem ersten Multiplexer MUX1 ausgegebenen und durch die Verzögerungsvorrichtung D2 verzögerten Daten weiterleitet. Auch dies darf jedoch nicht erfolgen, wenn die dem Vergleich zugrundeliegenden Daten der ersten Speichereinrichtung S1 zwischenzeitlich überschrieben wurden. In diesem Fall müssen die Anordnung oder bestimmte Teile derselben ebenfalls in einen definierten Zustand versetzt, oder zurückgesetzt, oder deaktiviert werden.

Die Durchführung des Vergleiches V2 erweist sich auch als vorteilhaft, wenn die Lese-Überwachungseinrichtung RMU beim Vergleich V1 festgestellt hat, daß die miteinander verglichenen Daten übereinstimmen, oder wenn ein ermittelter Fehler durch den vorstehend erwähnten Schritt V1-2a korrigiert werden konnte. Wenn in diesem Fall durch den Vergleich V2 festgestellt wird, daß die aus der ersten Speichereinrichtung S1 ausgegeben Daten fehlerhaft sind oder sein können, kann vorgesehen werden, daß die Lese-Überwachungseinrichtung RMU
- die Cores C1 und C2 anhält (Schritt V2-1),
- den ersten Multiplexer MUX1 umschaltet, so daß die aus der zweiten Speichereinrichtung S2 stammenden Daten an den Core C1 weitergeleitet werden (Schritt V2-2),
- dafür sorgt, daß die Cores C1 und C2 bei der Fortsetzung des Betriebes mit der Ausführung der Operation beginnen, die ausgeführt wurde, als der erfaßte Fehler auftrat (Schritt V2-3), und
- und die Cores C1 und C2 wieder weiterlaufen läßt (Schritt V2-4).

Die Ausführung des Schrittes V2-3 kann wie die Ausführung des Schrittes V1-3 erfolgen.

Es könnte auch vorgesehen werden, daß die Lese-Überwachungseinrichtung RMU zuerst den Vergleich V2 und die gegebenenfalls erforderlichen Korrektur-Maßnahmen durchführt, und erst danach den Vergleich V1 und die gegebenenfalls erforderlichen Korrektur-Maßnahmen durchführt.

Durch die Schreib-Überwachungseinrichtung WMU wird überprüft, ob die aus dem Core C1 ausgegebenen Daten und die aus dem Core C2 ausgegebenen Daten übereinstimmen oder einander entsprechen.

Genauer gesagt ist es so, daß die Schreib-Überwachungseinrichtung WMU durch einen im folgenden als Vergleich V3 bezeichneten Vergleich ermittelt, ob die Daten, die der Signatur-Generator SG1 aus den aus dem Core C1 ausgegebenen und durch die Verzögerungsvorrichtung D1 verzögerten Daten bildet, und die Daten die der Signatur-Generator SG2 aus den aus dem Core C2 ausgegebenen Daten bildet, identische oder einander entsprechende Daten sind. Diese Daten müßten bei ordnungsgemäßem Betrieb der Anordnung übereinstimmen, weil die Cores C1 und C2 das selbe Programm abarbeiten und die selben Operanden verwenden. Wenn der von der Schreib-Überwachungseinrichtung WMU durchgeführte Vergleich V3 ergibt, daß die verglichenen Daten identisch sind oder einander entsprechen, liegt keine Störung vor, so daß die Anordnung normal weiterarbeiten kann. Anderenfalls, d.h. wenn die verglichenen Daten nicht identisch sind oder einander nicht entsprechen, liegt eine Störung vor, auf welche die Schreib-Überwachungseinrichtung WMU reagiert.

Die Reaktion der Schreib-Überwachungseinrichtung WMU besteht darin,
- daß sie das Speichern der aus dem Core C1 ausgegebenen Daten in der Speichereinrichtung S2 und das Speichern der aus dem Core C2 ausgegebenen Daten in der Speichereinrichtung S3 unterbindet (Schritt V3-1),
- daß sie die Cores C1 und C2 anhält (Schritt V3-2),
- daß sie dafür sorgt, daß die Cores C1 und C2 bei der Fortsetzung des Betriebes mit der Ausführung der Operation beginnen, die ausgeführt wurde, als der Core C1 die dem Vergleich V3 zugrundegelegten Daten ausgab (Schritt V3-3), und
- daß die Cores C1 und C2 zum Weiterarbeiten veranlaßt werden (Schritt V3-4).

Nach dem Wiederanlaufen der Cores C1 und C2, genauer gesagt td später führt die Schreib-Überwachungseinrichtung WMU abermals den Vergleich V3 durch und überprüft, ob die aus den Cores C1 und C2 ausgegebenen Daten übereinstimmende oder einander entsprechende Daten sind. Die Tatsache, daß beim ersten Vergleich V3 festgestellt wurde, daß dies nicht der Fall ist, hat nicht automatisch zur Folge, daß dies auch bei der Wiederholung nicht der Fall ist; die Ursache für den beim ersten Vergleich V3 festgestellten Fehler kann nämlich eine vorübergehende Störung in der Write-Back-Stufe im Core C1 und/oder im Core C2 sein, und/oder eine vorübergehende Störung auf den Leitungen sein, über welche die Daten nach deren Ausgabe aus den Cores C1 und C2 übertragen werden.

Wenn die Schreib-Überwachungseinrichtung WMU beim erneuten Vergleich V3 feststellt, daß die verglichenen Daten übereinstimmen oder einander entsprechen, kann die Anordnung normal weiterarbeiten.

Anderenfalls sorgt die Schreib-Überwachungseinrichtung WMU dafür,
- daß die Cores C1 und C2 angehalten werden (Schritt V3-5),
- daß die Cores C1 und C2 bei der Fortsetzung des Betriebes mit der Ausführung der Instruktionen beginnen, die sich zu dem Zeitpunkt, als der Core C1 die dem Vergleich V3 zugrundegelegten Daten ausgab, in der Write-Back-Stufe der Pipeline befanden (Schritt V3-6), und
- daß die Cores C1 und C2 zum Weiterarbeiten veranlaßt werden (Schritt V3-7).

Insbesondere wenn durch die Lese-Überwachungseinrichtung RMU kein Vergleich V2 durchgeführt wird, kann es sich als vorteilhaft erweisen, wenn nach dem Schritt V3-6 ein zusätzlicher Schritt V3-6a eingefügt wird, in welchem der erste Multiplexer MUX1 umgeschaltet, d.h. so angesteuert wird, daß der erste Multiplexer MUX 1 die aus der zweiten Speichereinrichtung S2 ausgegebenen Daten zum Core C1 weiterleitet.

Nach dem Wiederanlaufen der Cores C1 und C2, genauer gesagt td später führt die Schreib-Überwachungseinrichtung WMU abermals einen Vergleich V3 durch und überprüft, ob die aus den Cores C1 und C2 ausgegebenen Daten übereinstimmende oder einander entsprechende Daten sind.

Wenn die Schreib-Überwachungseinrichtung WMU beim erneuten Vergleich V3 feststellt, daß die verglichenen Daten übereinstimmen oder einander entsprechen, kann die Anordnung normal weiterarbeiten. Wenn zuvor der Schritt V3-6a ausgeführt wurde, wird der Multiplexer MUX1 in den ursprünglichen Zustand zurückgeschaltet.

Anderenfalls sorgt die Schreib-Überwachungseinrichtung WMU dafür, daß die Anordnung in einen definierten Zustand versetzt wird, oder zurückgesetzt wird, oder deaktiviert wird.

Dadurch, daß sowohl durch die Lese-Überwachungseinrichtung RMU als auch durch die Schreib-Überwachungseinrichtung WMU dafür gesorgt wird, daß die Cores C1 und C2 die Operationen wiederholen, deren fehlerhafte Ausführung die Ursache für den erfaßten Fehler sein kann, kann ermittelt werden, ob der erfaßte Fehler ein dauerhafter Fehler oder nur ein einmaliger oder vorübergehender Fehler ist.

Dies wiederum ermöglicht es, daß mit geringem Aufwand und ohne nennenswerte Störung des Betriebes der Anordnung, daß die Anordnung oder Teile desselben nur dann deaktiviert oder zurückgesetzt werden, wenn der aufgetretene Fehler kein vorübergehender Fehler ist.

## Patentansprüche

1. System mit einer elektrischen Steuereinrichtung (C1), und mit einer Überwachungseinrichtung (RMU, WMU), durch welche überwacht wird, ob das System ordnungsgemäß arbeitet,
**dadurch gekennzeichnet,**
**daß** die Überwachungseinrichtung dazu ausgelegt ist, dass sie dann, wenn sie feststellt, daß das System nicht ordnungsgemäß arbeitet, die Steuereinrichtung anhält, und ohne ein zwischenzeitliches Rücksetzen der Steuereinrichtung oder des diese enthaltenden Systems und ohne ein Zurückversetzen in einen vorigen Zustand die Steuereinrichtung wieder weiterlaufen lässt, wobei das Anhalten der Steuereinrichtung so frühzeitig erfolgt, daß diese sich beim Anhalten noch in dem Zustand befindet, in welchem sie sich vor dem Auftreten des erfaßten Fehlers befand, wodurch die Steuereinrichtung bei der Fortseztzung des Betriebs mit der Ausführung der Operation beginnt, die ausgeführt wurde, als der Fehler erfaßt wurde.

2. System nach Anspruch 1,
**dadurch gekennzeichnet,**
**daß** die Überwachungseinrichtung (RMU, WMU) davon ausgeht, daß das System nicht ordnungsgemäß arbeitet, wenn sie bei der Überwachung feststellt, daß der Steuereinrichtung (C1) von einer Speichereinrichtung zugeführte Daten nicht mit den Daten übereinstimmen oder nicht den Daten entsprechen, die die Steuereinrichtung oder eine zweite Steuereinrichtung (C2) zuvor in die Speichereinrichtung geschrieben hat.

3. System nach Anspruch 2,
**dadurch gekennzeichnet,**
**daß** die Steuereinrichtung (C1) und die zweite Steuereinrichtung (C2) die selben oder einander entsprechende Aktionen ausführende oder veranlassende Einrichtungen sind.

4. System nach Anspruch 2 oder 3,
**dadurch gekennzeichnet,**
**daß** die Überwachungseinrichtung (RMU, WMU) dann, wenn sie feststellt, daß das System nicht ordnungsgemäß arbeitet, dafür sorgt, daß die fehlerhaften Daten korrigiert werden.

5. System nach Anspruch 4,
**dadurch gekennzeichnet,**
**daß** die Korrektur unter Verwendung eines eine Fehlerkorrektur gestattenden Codes erfolgt.

6. System nach Anspruch 4,
**dadurch gekennzeichnet,**
**daß** die Korrektur durch Überschreiben des die fehlerhaften Daten speichernden Teils der Speichereinrichtung durch in einer anderen Speichereinrichtung gespeicherte Daten erfolgt.

7. System nach einem der Ansprüche 2 bis 6,
**dadurch gekennzeichnet,**
**daß** die Überwachungseinrichtung (RMU, WMU) dann, wenn sie davon ausgeht, daß das System nicht ordnungsgemäß arbeitet, die Steuereinrichtung (C1) so beeinflußt, daß sie nach der Korrektur der fehlerhaften Daten die korrigierten Daten einliest.

8. System nach Anspruch 7,
**dadurch gekennzeichnet,**
**daß** die Beeinflussung der Steuereinrichtung (C1) darin besteht, daß dafür gesorgt wird, daß sich die Steuereinrichtung in dem Zustand befindet, den sie innehatte, als ihr die fehlerhaften Daten zugeführt wurden.

9. System nach Anspruch 8,
**dadurch gekennzeichnet,**
**daß** die Beeinflussung der Steuereinrichtung (C1) umfaßt, daß die Steuereinrichtung zumindest bis zu dem Zeitpunkt, zu dem die fehlerhaften Daten korrigiert sind, angehalten wird.

10. Verfahren zum Betreiben eines Systems mit einer elektrischen Steuereinrichtung (C1), und mit einer Überwachungseinrichtung (RMU, WMU), durch welche überwacht wird, ob das System ordnungsgemäß arbeitet,
**dadurch gekennzeichnet,**
**daß** dann, wenn festgestellt wird, daß das System nicht ordnungsgemäß arbeitet, die Steuereinrichtung angehalten wird und ohne ein zwischenzeitliches Rücksetzen der Steuereinrichtung oder des diese enthaltenden Systems und ohne ein Zurückversetzen in einen vorigen Zustand dafür gesorgt wird, daß die Steuereinrichtung wieder weiterläuft, wobei das Anhalten der Steuereinrichtung so frühzeitig erfolgt, daß diese sich beim Anhalten noch in dem Zustand befindet, in welchem sie sich vor dem Auftreten des erfaßten Fehlers befand, wodurch die Steuereinrichtung bei der Fortseztzung des Betriebs mit der Ausführung der Operation beginnt, die ausgeführt wurde, als der Fehler erfaßt wurde.

11. Verfahren nach Anspruch 10,
**dadurch gekennzeichnet,**
**daß** davon ausgegangen wird, daß das System nicht ordnungsgemäß arbeitet, wenn bei der Überwachung festgestellt wird, daß der Steuereinrichtung (C1) von einer Speichereinrichtung zugeführte Daten nicht mit den Daten übereinstimmen oder nicht den Daten entsprechen, die die Steuereinrichtung oder eine zweite Steuereinrichtung (C2) zuvor in die Speichereinrichtung geschrieben hat.

12. Verfahren nach Anspruch 11,
**dadurch gekennzeichnet,**
**daß** die Steuereinrichtung (C1) und die zweite Steuereinrichtung (C2) die selben oder einander entsprechende Aktionen ausführende oder veranlassende Einrichtungen sind.

13. Verfahren nach Anspruch 11 oder 12,
**dadurch gekennzeichnet,**
**daß** dann, wenn festgestellt wird, daß das System nicht ordnungsgemäß arbeitet, die fehlerhaften Daten korrigiert werden.

14. Verfahren nach Anspruch 13,
**dadurch gekennzeichnet,**
**daß** die Korrektur unter Verwendung eines eine Fehlerkorrektur gestattenden Codes erfolgt.

15. Verfahren nach Anspruch 13,
**dadurch gekennzeichnet,**
**daß** die Korrektur durch Überschreiben des die fehlerhaften Daten speichernden Teils der Speichereinrichtung durch in einer anderen Speichereinrichtung gespeicherte Daten erfolgt.

16. Verfahren nach einem der Ansprüche 11 bis 15,
**dadurch gekennzeichnet,**
**daß** dann, wenn davon ausgegangen wird, daß das System nicht ordnungsgemäß arbeitet, die Steuereinrichtung (C1) so beeinflußt wird, daß sie nach der Korrektur der fehlerhaften Daten die korrigierten Daten einliest.

17. Verfahren nach Anspruch 16,
**dadurch gekennzeichnet,**
**daß** die Beeinflussung der Steuereinrichtung (C1) darin besteht, daß dafür gesorgt wird, daß sich die Steuereinrichtung in dem Zustand befindet, den sie innehatte, als ihr die fehlerhaften Daten zugeführt wurden.

18. Verfahren nach Anspruch 17,
**dadurch gekennzeichnet,**
**daß** die Beeinflussung der Steuereinrichtung (C1) umfaßt, daß die Steuereinrichtung zumindest bis zu dem Zeitpunkt, zu dem die fehlerhaften Daten korrigiert sind, angehalten wird.

## Claims

1. System having an electric control device (C1) and having a monitoring device (RMU, WMU), which monitors whether the system is operating properly, **characterized in that** the monitoring device is designed such that, if it determines that the system is not operating properly, it stops the control device and, without resetting the control device or the system containing the latter in the meantime and without restoration to a previous state, permits the control device to continue to run, wherein the control device is stopped so early that, when it is stopped, it is still in the state in which it was before the registered fault occurred, as a result of which the control device, when operation is continued, begins with the execution of the operation which was being executed when the fault was registered.

2. System according to Claim 1, **characterized in that** the monitoring device (RMU, WMU) assumes that the system is not operating properly if it determines, during the monitoring, that the data fed to the control device (C1) from a storage device does not agree with the data which the control device or a second control device (C2) has previously written into the storage device.

3. System according to Claim 2, **characterized in that** the control device (C1) and the second control device (C2) are devices that execute or bring about the same or mutually corresponding actions.

4. System according to Claim 2 or 3, **characterized in that**, if it determines that the system is not operating properly, the monitoring device (RMU, WMU) ensures that the faulty data is corrected.

5. System according to Claim 4, **characterized in that** the correction is made by using a code permitting an error correction.

6. System according to Claim 4, **characterized in that** the correction is made by overwriting the part of the storage device storing the faulty data with data stored in another storage device.

7. System according to one of Claims 2 to 6, **characterized in that**, if it assumes that the system is not operating properly, the monitoring device (RMU, WMU) influences the control device (C1) in such a way that it reads the corrected data in after correcting the faulty data.

8. System according to Claim 7, **characterized in that** influencing the control device (C1) consists in ensuring that the control device is in the state which it had when the faulty data was fed to it.

9. System according to Claim 8, **characterized in that** influencing the control device (C1) comprises stopping the control device at least until the time at which the faulty data is corrected.

10. Method of operating a system having an electric control device (C1) and having a monitoring device (RMU, WMU) which monitors whether the system is operating properly, **characterized in that**, if it is determined that the system is not operating properly, the control device is stopped and, without resetting the control device or the system containing the latter in the meantime and without restoration to a previous state, it is ensured that the control device continues to run, wherein the control device is stopped so early that, when it is stopped, it is still in the state in which it was before the registered fault occurred, as a result of which the control device, when operation is continued, begins with the execution of the operation which was being executed when the fault was registered.

11. Method according to Claim 10, **characterized in that** it is assumed that the system is not operating properly if, during the monitoring, it is determined that data fed to the control device (C1) by a storage device does not agree with the data or does not correspond to the data which the control device or a second control device (C2) has previously written into the storage device.

12. Method according to Claim 11, **characterized in that** the control device (C1) and the second control device (C2) are devices that execute or bring about the same or mutually corresponding actions.

13. Method according to Claim 11 or 12, **characterized in that**, if it is determined that the system is not operating properly, the faulty data is corrected.

14. Method according to Claim 13, **characterized in that** the correction is made by using a code permitting an error correction.

15. Method according to Claim 13, **characterized in that** the correction is made by overwriting the part of the storage device storing the faulty data with data stored in another storage device.

16. Method according to one of Claims 11 to 15, **characterized in that**, if it is assumed that the system is not operating properly, the control device (C1) is influenced in such a way that it reads in the corrected data after the correction of the faulty data.

17. Method according to Claim 16, **characterized in that** influencing the control device (C1) consists in its being ensured that the control device is in the state it had when the faulty data was fed to it.

18. Method according to Claim 17, **characterized in that** influencing the control device (C1) comprises stopping the control device, at least until the time at which the faulty data is corrected.

## Revendications

1. Système comportant un dispositif de commande électrique (C1) et comportant un dispositif de surveillance (RMU, WMU) au moyen desquels il est surveillé si le système fonctionne de manière nominale, **caractérisé en ce que**
le dispositif de surveillance est conçu pour arrêter le dispositif de commande lorsqu'il établit que le système ne fonctionne pas de manière nominale et pour remettre en fonctionnement le dispositif de commande sans réinitialisation intermédiaire du dispositif de commande ou du système qui le comporte et sans retour à un état antérieur, dans lequel l'arrêt du dispositif de commande s'effectue de manière anticipée afin que celui-ci se trouve encore, lors de son arrêt, dans l'état dans lequel il se trouvait avant la survenue de l'erreur détectée, d'où il résulte que le dispositif de commande, lors de la reprise du fonctionnement, commence par effectuer l'opération qui aurait été effectuée lorsque l'erreur a été détectée.

2. Système selon la revendication 1,
**caractérisé en ce que** le dispositif de surveillance (RMU, WMU) détermine que le système ne fonctionne pas de manière nominale lorsqu'il établit, lors de la surveillance, que des données fournies au dispositif de commande (C1) par un dispositif de mémoire ne concordent pas avec les données, ou ne correspondent pas aux données que le dispositif de commande ou un second dispositif de commande (C2) a préalablement écrites dans le dispositif de mémoire.

3. Système selon la revendication 2,
**caractérisé en ce que** le dispositif de commande (C1) et le second dispositif de commande (C2) sont des dispositifs effectuant ou ordonnant des actions identiques ou mutuellement correspondantes.

4. Système selon la revendication 2 ou 3,
**caractérisé en ce que** le dispositif de surveillance (RMU, WMU) fait en sorte que, lorsqu'il établit que le système ne fonctionne pas de manière nominale, les données erronées soient corrigées.

5. Système selon la revendication 4,
**caractérisé en ce que** la correction s'effectue en utilisant un code permettant une correction d'erreur.

6. Système selon la revendication 4,
**caractérisé en ce que** la correction est effectuée par réécriture, dans la partie du dispositif de mémoire qui stocke les données erronées, de données stockées dans un autre dispositif de mémoire.

7. Système selon l'une quelconque des revendications 2 à 6,
**caractérisé en ce que** le dispositif de surveillance (RMU, WMU), lorsqu'il établit que le système ne fonctionne pas de manière nominale, influence le dispositif de commande (C1) de manière à ce qu'il lise en entrée les données corrigées après correction des données erronées.

8. Système selon la revendication 7,
**caractérisé en ce que** l'influence sur le dispositif de commande (C1) consiste à faire en sorte que le dispositif de commande se trouve dans l'état dans lequel il se trouvait lorsque les données erronées lui ont été fournies.

9. Système selon la revendication 8,
**caractérisé en ce que** l'influence sur le dispositif de commande (C1) consiste à arrêter le dispositif de commande au moins jusqu'à l'instant où les données erronées sont corrigées.

10. Procédé de mise en fonctionnement d'un système comportant un dispositif de commande électrique (C1) et comportant un dispositif de surveillance (RMU, WMU) au moyen desquels il est surveillé si le système fonctionne de manière nominale,
**caractérisé en ce que**, lorsqu'il est établi que le système ne fonctionne pas de manière nominale, le dispositif de commande est arrêté et **en ce que** le dispositif de commande est remis en fonctionnement sans réinitialisation intermédiaire du dispositif de commande ou du système qui le comporte et sans retour à un état antérieur, dans lequel l'arrêt du dispositif de commande s'effectue de manière anticipée afin que celui-ci se trouve encore, lors de son arrêt, dans l'état dans lequel il se trouvait avant la survenue de l'erreur détectée, d'où il résulte que le dispositif de commande, lors de la reprise du fonctionnement, commence par effectuer l'opération qui a été effectuée lorsque l'erreur a été détectée.

11. Procédé selon la revendication 10,
**caractérisé en ce qu'**il est déterminé que le système ne fonctionne pas de manière nominale lorsqu'il est établi, lors de la surveillance, que des données fournies au dispositif de commande (C1) par un dispositif de mémoire ne concordent pas avec les données, ou ne correspondent pas aux données que le dispositif de commande ou un second dispositif de commande (C2) a préalablement écrites dans le dispositif de mémoire.

12. Procédé selon la revendication 11,
**caractérisé en ce que** le dispositif de commande (C1) et le second dispositif de commande (C2) sont des dispositifs effectuant ou ordonnant des actions identiques ou mutuellement correspondantes.

13. Procédé selon la revendication 11 ou 12,
**caractérisé en ce que**, lorsqu'il est établi que le système ne fonctionne pas de manière nominale, les données erronées sont corrigées.

14. Procédé selon la revendication 13,
**caractérisé en ce que** la correction s'effectue en utilisant un code permettant une correction d'erreur.

15. Procédé selon la revendication 13,
**caractérisé en ce que** la correction est effectuée par réécriture, dans la partie du dispositif de mémoire qui stocke les données erronées, de données stockées dans un autre dispositif de mémoire.

16. Procédé selon l'une quelconque des revendications 11 à 15,
**caractérisé en ce que**, lorsqu'il est déterminé que le système ne fonctionne pas de manière nominale, le dispositif de commande (C1) est influencé de manière à lire en entrée les données corrigées après correction des données erronées.

17. Procédé selon la revendication 16,
**caractérisé en ce que** l'influence sur le dispositif de commande (C1) consiste à faire en sorte que le dispositif de commande se trouve dans l'état dans lequel il se trouvait lorsque les données erronées lui ont été fournies.

18. Procédé selon la revendication 17,
**caractérisé en ce que** l'influence sur le dispositif de commande (C1) consiste à arrêter le dispositif de commande au moins jusqu'à l'instant où les données erronées sont corrigées.
